# EUROPEAN PATENT SPECIFICATION

(11) **EP 3 537 052 B1**
(45) Date of publication and mention of the grant of the patent: **13.05.2020**
(21) Application number: 17867290.3
(22) Date of filing: 09.10.2017
(51) Int. Cl.: F24F 1/00, F24S 40/46, F24S 10/40

(54) **SOLAR HEAT COLLECTOR**
SONNENWÄRMEKOLLEKTOR
COLLECTEUR DE CHALEUR SOLAIRE

(30) Priority: 07.11.2016 JP 2016217146
(43) Date of publication of application: 11.09.2019
(73) Proprietor: Kabushiki Kaisha Toyota Jidoshokki, Kariya-shi, Aichi 448-8671 (JP)
(72) Inventor: MOCHIZUKI Kenji, Kariya-shi Aichi 448-8671 (JP)
(74) Representative: TBK
(86) International application number: PCT/JP2017/036558
(87) International publication number: WO 2018/083946

(56) References cited:
- EP-A1- 2 597 395
- WO-A2-2011/081900
- WO-A2-2011/081900
- DE-A1-102011 082 767
- JP-A- 2012 122 693
- JP-A- 2015 014 444
- JP-A- 2015 014 444
- JP-A- 2015 064 138
- US-A1- 2012 186 576

## Description

### TECHNICAL FIELD

The present invention relates to a solar heat collector and, more particularly, to a solar heat collector that includes a getter member that adsorbs gases.

### BACKGROUND ART

In a solar heat collector, sun light heats a heating-medium circulating tube that is made of metal and through which various heating media flow so that the heating media are heated and the heat is utilized. In order to prevent the heat transfer from the heating-medium circulating tube to the atmosphere and thus to prevent the loss of heat from the heating media, the heating-medium circulating tube is covered by a light transmitting glass tube, and an annular space between the glass tube and the heating-medium circulating tube is maintained in vacuum. Consequently, the heating-medium circulating tube is thermally insulated against the atmosphere.

However, gases enter into the annular space since gas molecules are released from the metal which forms the heating-medium circulating tube, or gas molecules that are generated from the heating medium decomposed by heat penetrate through the heating-medium circulating tube, or gas molecules of the air penetrate through joint portions where the heating-medium circulating tube is joined to the glass tube, for example. These gases are mainly hydrogen of which molecules are small. Since the gases that enter into the annular space lower the vacuum degree of the annular space, the thermal insulation capability of the heating-medium circulating tube against the air gradually decreases. Consequently, heat loss of the solar heat collector increases and the efficiency of the solar heat collector decreases.

Since a solar heat collector disclosed in JP 2015 014444 A has in an annular space thereof a getter member that adsorbs gases, the vacuum degree of the annular space is ensured.

Other solar heat collectors comprising getter elements in an annular space are also disclosed in JP 2015 064138 A, DE 10 2011 082767 A1 and WO 2011/081900 A2.

### SUMMARY OF INVENTION

### Technical Problem

A solar heat collector generally includes a plurality of heating-medium circulating tubes connected in series, and a heating medium is circulated successively through the plurality of heating-medium circulating tubes by a pump so that the heating medium is gradually heated while the heating medium flows from the upstream side to the downstream side. Consequently, the heating medium on the downstream side of the solar heat collector has a higher temperature than the heating medium on the upstream side of the solar heat collector.

Therefore, it is more difficult to ensure vacuum degree of the annular spaces on the downstream side of heating medium of the solar heat collector than to ensure vacuum degree of the annular spaces on the upstream side of the heating medium of the solar heat collector. Therefore, heat loss of the solar heat collector increases and the efficiency of the solar heat collector decreases.

The present invention is made to solve the above problems. It is an object of the present invention to provide a solar heat collector that does not cause an increase in the heat loss and does not lower the efficiency by securing vacuum degree of annular spaces even on the downstream side of heating medium the temperature of which is higher than that of the upstream side of heating medium.

### Solution to Problem

To solve the above problems, a solar heat collector according to the present invention includes a plurality of heat collecting tubes connected in series. The heat collecting tube each includes: a heating-medium circulating tube through which a heating medium circulates; a glass tube that covers an outer peripheral surface of the heating-medium circulating tube and forms an annular space between the glass tube and the heating-medium circulating tube; and a getter member that adsorbs a gas that exists within the annular space. A heat collecting tube on a downstream side of the heating medium includes a larger number of the getter members than another heat collecting tube on an upstream side of the heating medium. The solar heat collector may include a plurality of accommodating members that accommodate and hold the getter member.

### Advantageous Effects of Invention

The solar heat collector according to the present invention includes: a plurality of heat collecting tubes that are connected in series. The heat collecting tubes each include: a heating-medium circulating tube through which a heating medium circulates, a glass tube that covers an outer peripheral surface of the heating-medium circulating tube and forms an annular space between the glass tube and the heating-medium circulating tube, and a getter member that adsorbs a gas that exists within the annular space. The heat collecting tube on a downstream side of the heating medium includes a larger number of the getter members than the heat collecting tube on an upstream side of the heating medium. Therefore, the solar heat collector according to the present invention does not cause an increase in the heat loss and does not lower the efficiency by securing the vacuum degree of the annular space even on the downstream side of the heating medium the temperature of which is higher than that of the upstream side of the heating medium.

### BRIEF DESCRIPTION OF DRAWINGS

FIG. 1 is a cross-sectional schematic view of a heat collecting tube of a solar heat collector according to a first embodiment of the present invention.
FIG. 2 is a schematic view of a getter holder illustrated in FIG. 1.
FIG. 3 is a schematic view of the solar heat collector according to the first embodiment of the present invention.
FIG. 4 is a schematic view of a solar heat collector according to a second embodiment of the present invention.
FIG. 5 is a schematic view of a getter holder according to a modification of the first or second embodiment of the present invention.

### DESCRIPTION OF EMBODIMENTS

### First Embodiment

Hereinafter, a first embodiment of the present invention will be described with reference to the drawings.

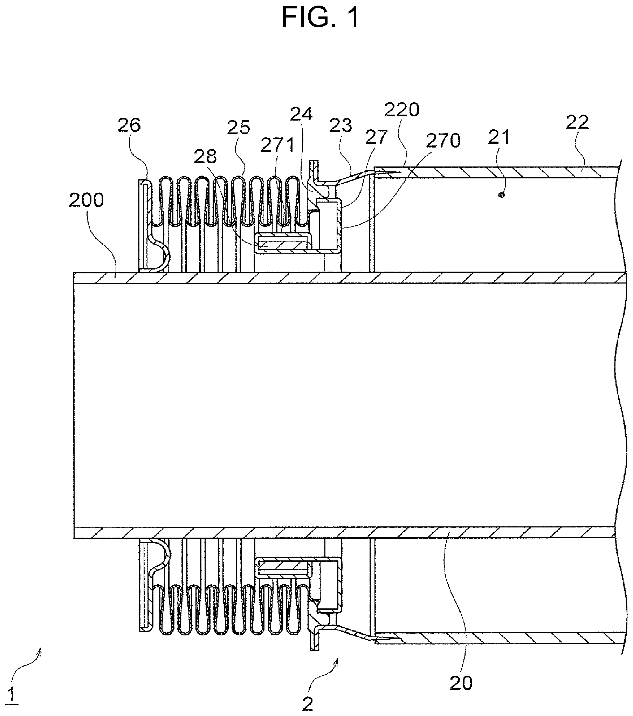

FIG. 1 is a cross-sectional schematic view that illustrates one end of one of heat collecting tubes of a solar heat collector according to the first embodiment of the present invention.

A solar heat collector 1 includes a plurality of heat collecting tubes 2. Each heat collecting tube 2 includes a heating-medium circulating tube 20 through which a heating medium, such as molten salt, circulates, and a glass tube 22 that covers an outer peripheral surface of the heating-medium circulating tube 20 and forms an annular space 21 between the glass tube 22 and the heating-medium circulating tube 20. The total length of the glass tube 22 is shorter than the total length of the heating-medium circulating tube 20.

A Kovar ring 23, which is made of Kovar and is a cylindrical member that is concentric with the heating-medium circulating tube 20, is disposed at an end 220 of the glass tube 22. An annular bellows ring 24 that is concentric with the heating-medium circulating tube 20 is connected to the Kovar ring 23 by welding. One end of an annular bellows 25 that is concentric with the heating-medium circulating tube 20 is connected to the bellows ring 24 by welding. A flange 26 that is a thin-plate-shaped annular member and is concentric with the heating-medium circulating tube 20 is connected to the other end of the bellows 25 by welding. An inner circumferential portion of the flange 26 is connected to an outer peripheral surface of an end 200 of the heating-medium circulating tube 20 by welding.

The heating-medium circulating tube 20, the bellows ring 24, the bellows 25, and the flange 26 are made of metal, such as stainless steel. The bellows 25 also constitute a thermal-expansion-difference absorbing member that absorbs thermal-expansion difference between the heating-medium circulating tube 20 and the glass tube 22.

The glass tube 22, the Kovar ring 23, the bellows ring 24, the bellows 25, the flange 26, and the heating-medium circulating tube 20 cooperate to seal the annular space 21 against the atmosphere around the solar heat collector 1, and the annular space 21 is maintained in vacuum.

A getter holder 27 that is concentric with the heating-medium circulating tube 20 is attached to the bellows ring 24 and is disposed radially inside the bellows ring 24.

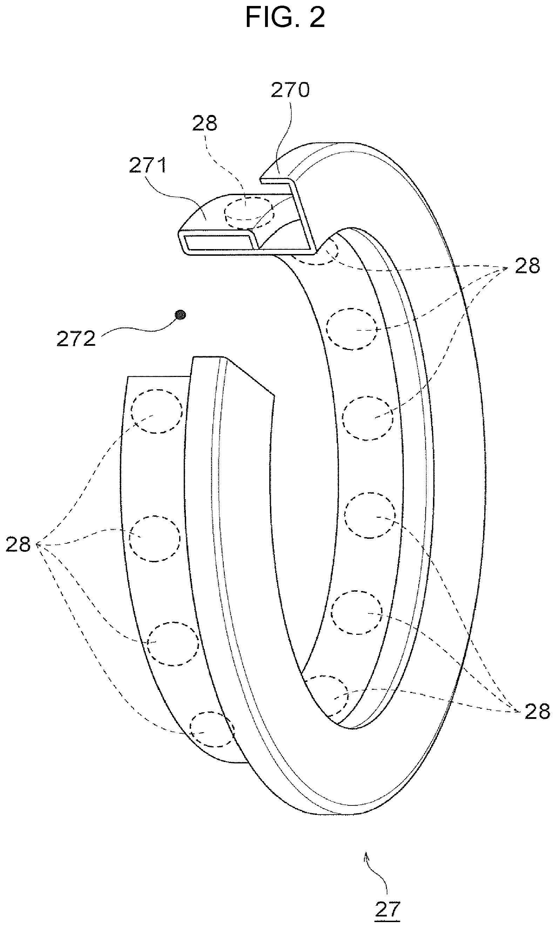

As illustrated in FIG. 2, the getter holder 27 includes a supporting member 270 connected to the bellows ring 24, and a first accommodating member 271 that accommodates and holds getter members. The first accommodating member 271 is connected to the supporting member 270.

The getter holder 27 has an annular shape that has a void portion in a circumferential direction of the getter holder 27. Through the void portion 272, a prescribed quantity or number of getter members 28 each having a tablet-like shape are inserted into the first accommodating member 271.

Each getter member 28 is formed of a shaped metal, such as zirconium-based alloy or titanium. The getter members 28 are provided so as to adsorb gas molecules in the annular space 21 illustrated in FIG. 1. The getter members 28 may be made of another appropriate member or have another appropriate shape. Although FIG. 1 illustrates one end of one of the heat collecting tubes 2, the other end of the heat collecting tube 2 has the same configuration.

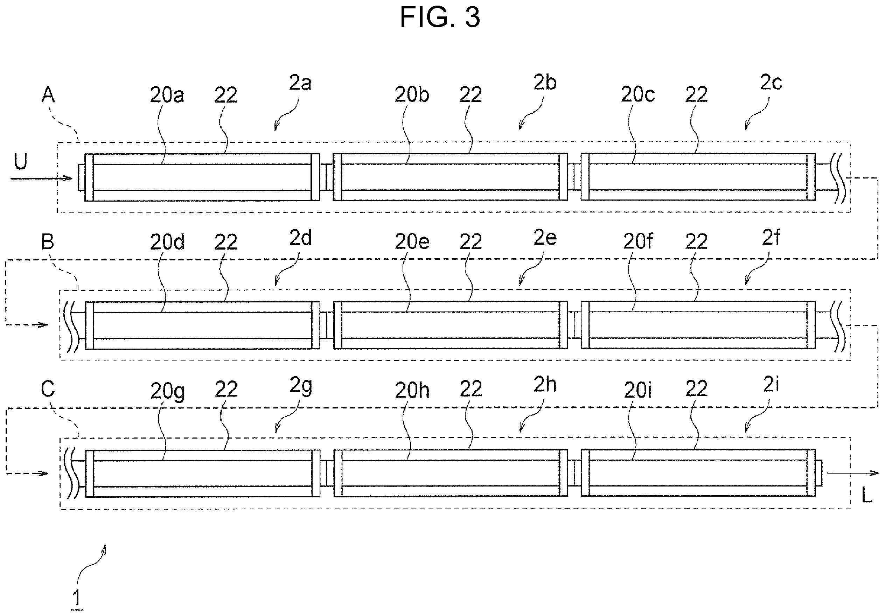

As illustrated in FIG. 3, heating-medium circulating tubes 20a to 20i of heat collecting tubes 2a to 2i are connected in series to constitute the solar heat collector 1. Heating medium is circulated successively through the heating-medium circulating tubes 20 by a pump, which is not illustrated. Sun light impinges on the heat collecting tubes 2a to 2i of the solar heat collector 1, passes through the glass tubes 22, and heats the heating-medium circulating tubes 20. Since the heating medium is heated while the heating medium circulates successively through the heating-medium circulating tubes 20, the heating medium on a downstream side has a higher temperature than the heating medium on an upstream side. For example, a temperature of the heating medium on the downstream side is 650°C, and a temperature of the heating medium on the upstream side is 350°C. Thus, temperatures of the heating-medium circulating tubes 20 to which the heating medium transfers heat also become higher successively from the heating-medium circulating tube 20a on the upstream side toward the heating-medium circulating tube 20i on the downstream side illustrated in FIG. 3, for example.

As described above, annular spaces 21 are sealed, as illustrated in FIG. 1. However, gases that have been adsorbed by metal forming the heating-medium circulating tubes 20 are released into the annular spaces 21, or gases that leak in through joint portions where the heating-medium circulating tubes 20 are joined to the glass tubes 22 are released into the annular spaces 21. Further, gases generated from a heating medium that is decomposed by heat are released into the annular spaces 21 through the heating-medium circulating tubes 20. These gases are mainly hydrogen of which molecules are small. Since the gases released into the annular spaces 21 lower the vacuum degree of the annular spaces 21, the thermal insulation capability of the heating-medium circulating tubes 20 against the atmosphere decreases gradually. Consequently, heat loss of the solar heat collector 1 increases, and the efficiency of the solar heat collector 1 decreases.

Generally, as the temperature of metal forming the heating-medium circulating tubes 20 rises, the amount of gases which have been adsorbed by the metal and are released into the annular spaces 21 increases. Further, as the temperature of the heating-medium circulating tubes 20 rises, the amount of gases, such as hydrogen, that is generated by decomposition of the heating medium increases. Consequently, the amount of gases that penetrate through the heating-medium circulating tubes 20 and is released into the annular spaces 21 increases.

As described above, since gas molecules released into the annular spaces 21 are adsorbed by the getter members 28, the vacuum degree of the annular spaces 21 is maintained. However, as the temperature of the getter members 28 rises, the amount of gases adsorbed per a certain quantity or number of the getter members 28 decreases. Therefore, in order to maintain the vacuum degree within each annular space 21 (see FIG. 1) at a specified level across the whole solar heat collector 1, as illustrated in FIG. 3, the quantity or number of the getter members 28 (see FIG. 1) needs to be increased with decreasing distance to the heat collecting tube 2i on the downstream side.

Therefore, in the first embodiment of the present invention, the heat collecting tubes 2a to 2c on the upstream side of the heating medium are defined as a low-temperature group A, the heat collecting tubes 2d to 2f are defined as an intermediate group B, and the heat collecting tubes 2g to 2i on the downstream side of the heating medium are defined as a high-temperature group C. The groups are different from each other in the quantity or number of the getter members 28 accommodated in first accommodating members 271 in each group. For example, in the low-temperature group A, the first accommodating members 271 (see FIG. 1) of the heating-medium circulating tubes 20a to 20c each accommodate four getter members 28. In the intermediate group B, the first accommodating members 271 of the heating-medium circulating tubes 20d to 20f each accommodate 12 getter members 28. In the high-temperature group C, the first accommodating members 271 of the heating-medium circulating tubes 20g to 20i each accommodate 20 getter members 28.

In this way, each heating-medium circulating tube 20 in the intermediate group B includes a larger number of the getter members 28 than each heating-medium circulating tube 20 in the low-temperature group A on the upstream side of heating medium. Further, each heating-medium circulating tube 20 in the high-temperature group C on the downstream side of heating medium includes a larger number of the getter members 28 than each heating-medium circulating tube 20 in the intermediate group B. Therefore, the amount of gases adsorbed by the getter members 28 is maintained at a substantially constant level across the whole solar heat collector 1.

In this way, the solar heat collector includes the plurality of heat collecting tubes 2 that are connected in series. Each heat collecting tube 2 includes the heating-medium circulating tube 20 through which a heating medium circulates, the glass tube 22 that covers an outer peripheral surface of the heating-medium circulating tube 20 and forms the annular space 21 between the glass tube 22 and the heating-medium circulating tube 20, and the getter members 28 that adsorb gases that exist within the annular space 21. Each heat collecting tube 2 on the downstream side of heating medium includes a larger number of the getter members 28 than each heat collecting tube 2 on the upstream side of heating medium does. Therefore, the solar heat collector does not increase the heat loss and does not lower the efficiency of the solar heat collector by securing the vacuum degree of the annular spaces 21, even on the downstream side of heating medium the temperature of which is higher than that of the upstream side of heating medium.

In the first embodiment, the nine heat collecting tubes 2a to 2i are equally divided into the low-temperature group A, the intermediate group B, and the high-temperature group C. However, the number of the heat collecting tubes 2 necessary for the whole solar heat collector 1 may be determined appropriately in accordance with the configuration of a plant where the solar heat collector 1 is disposed. Further, an appropriate number of groups of the heat collecting tubes 2 in the solar heat collector 1, an appropriate number of the heat collecting tubes 2 each group includes, and an appropriate number the getter members 28 of each group may be determined based on a configuration of a plant or a surrounding environment to maintain the vacuum degree of the annular spaces 21.

### Second Embodiment

Next, a configuration of a second embodiment of the present invention will be described. In the following embodiment, the same reference numerals as those in FIGS. 1 to 3 denote the same or similar components. Therefore, the same or similar components will not be described in detail.

In the second embodiment, heat collecting tubes 2 each include different number of the getter members 28.

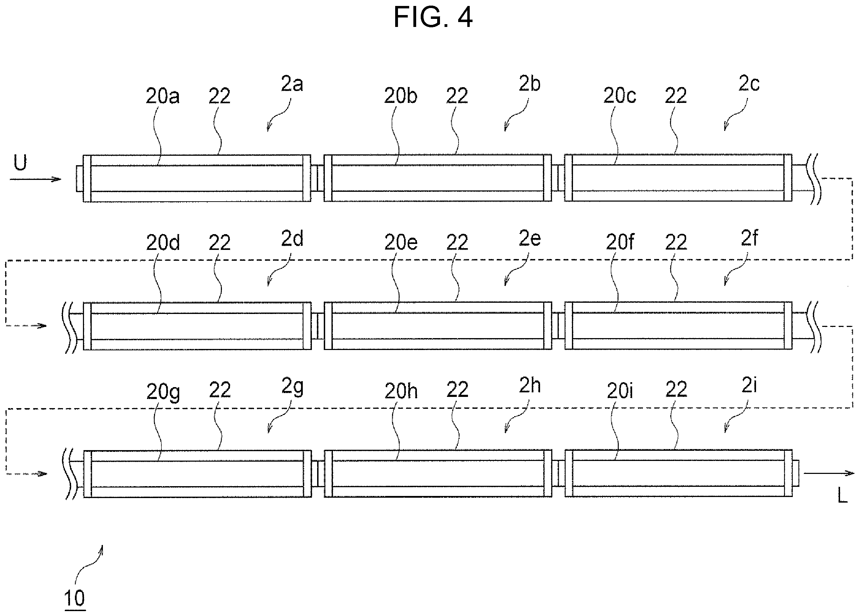

A solar heat collector 10 illustrated in FIG. 4 has the same configuration as that of the solar heat collector 1 according to the first embodiment illustrated in FIG. 3, except for the number of the getter members 28 (see FIG. 1). However, the heat collecting tubes 2 of the solar heat collector 1 according to the second embodiment are not divided into a low-temperature group A, an intermediate group B, and a high-temperature group C, unlike the solar heat collector 1 according to the first embodiment.

In the solar heat collector 10, the first accommodating member 271 of each heat collecting tube 2 accommodates a larger number of the getter members 28 on the downstream side of heating medium than that on the upstream side of heating medium. For example, the heat collecting tube 2a includes a single getter member 28, a heat collecting tube 2b includes two getter members 28, and a heat collecting tube 2c includes three getter members 28. In this way, one getter member 28 is added with each decreasing distance to the downstream side of heating medium. A heat collecting tube 2i on the downstream side includes nine getter members 28.

In this way, each heat collecting tube 2 includes a larger number of the getter members 28 on the downstream side of heating medium than that on the upstream side of heating medium. Therefore, more specific number of the getter members 28 that is appropriate for a temperature of each heating-medium circulating tube 20 may be disposed, as compared with the first embodiment.

In the second embodiment, the nine heat collecting tubes 2a to 2i are disposed, the heat collecting tube 2a includes a single getter member 28, and one getter member 28 is added with each decreasing distance to the downstream side of heating medium. However, the number of the heat collecting tubes 2 necessary for the whole solar heat collector 1 may be determined appropriately in accordance with the configuration of the plant where the solar heat collector 1 is disposed. Further, the number of the getter members 28 of each heat collecting tube 2 may be determined appropriately in accordance with the configuration or the surrounding environment of the plant to maintain the vacuum degree of the annular spaces 21.

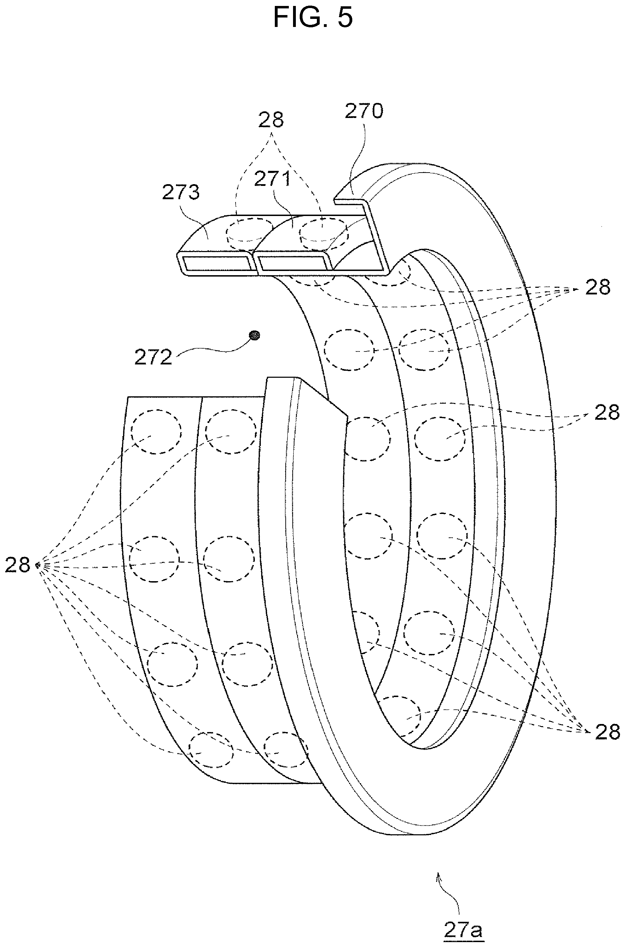

In the first and second embodiments, the solar heat collectors 1 and 10 each include the getter holders 27 each of which includes one first accommodating member 271. However, the solar heat collectors 1 and 10 may each include getter holders 27a each of which includes one first accommodating member 271 and one second accommodating member 273, as illustrated in FIG. 5, or includes two or more accommodating members connected together. Since the getter holders 27a include more accommodating members than the getter holders 27, the number of the getter members 28 may be adjusted more flexibly.

In the first and second embodiments, each heat collecting tube 2 includes the getter holder 27 or the getter holder 27a that is concentric with the heating-medium circulating tube 20, and includes the supporting member 270, the first accommodating member 271, and the gap 272. However, the getter holder 27 or the getter holder 27a may have other configurations and shapes.

### Reference Signs List

- 1, 10: solar heat collector
- 2, 2a to 2i: heat collecting tube
- 20, 20a to 20i: heating-medium circulating tube
- 21: annular space
- 22: glass tube
- 28: getter member
- 271: first accommodating member (accommodating member)
- 273: second accommodating member (accommodating member)

## Claims

1. A solar heat collector (1, 10) comprising:
a plurality of heat collecting tubes (2, 2a, 2b, 2c, 2d, 2e, 2f, 2g, 2h, 2i) connected in series, the heat collecting tubes (2, 2a, 2b, 2c, 2d, 2e, 2f, 2g, 2h, 2i) each including:
a heating-medium circulating tube (20, 20a, 20b, 20c, 20d, 20e, 20f, 20g, 20h, 20i) through which a heating medium circulates;
a glass tube (22) that covers an outer peripheral surface of the heating-medium circulating tube (20, 20a, 20b, 20c, 20d, 20e, 20f, 20g, 20h, 20i) and forms an annular space (21) between the glass tube (22) and the heating-medium circulating tube (20, 20a, 20b, 20c, 20d, 20e, 20f, 20g, 20h, 20i); and
a getter member (28) that adsorbs a gas that exists within the annular space (21), **characterized in that**
a heat collecting tube (2, 2a, 2b, 2c, 2d, 2e, 2f, 2g, 2h, 2i) on a downstream side of the heating medium includes a larger number of the getter members (28) than another heat collecting tube (2, 2a, 2b, 2c, 2d, 2e, 2f, 2g, 2h, 2i) on an upstream side of the heating medium.

2. The solar heat collector (1, 10) according to claim 1, **characterized by** comprising a plurality of accommodating members (271, 273) that accommodate and hold the getter member (28).

## Patentansprüche

1. Solarwärmekollektor (1, 10) mit:
einer Vielzahl von Wärmesammelrohren (2, 2a, 2b, 2c, 2d, 2e, 2f, 2g, 2h, 2i), die in Reihe verbunden sind, wobei die Wärmesammelrohre (2, 2a, 2b, 2c, 2d, 2e, 2f, 2g, 2h, 2i) jeweils Folgendes haben:
ein Wärmemediumzirkulationsrohr (20, 20a, 20b, 20c, 20d, 20e, 20f, 20g, 20h, 20i), durch das hindurch ein Wärmemedium zirkuliert;
ein Glasrohr (22), das eine Außenumfangsfläche des Wärmemediumzirkulationsrohrs (20, 20a, 20b, 20c, 20d, 20e, 20f, 20g, 20h, 20i) bedeckt und einen ringförmigen Raum (21) zwischen dem Glasrohr (22) und dem Wärmemediumzirkulationsrohr (20, 20a, 20b, 20c, 20d, 20e, 20f, 20g, 20h, 20i) ausbildet; und
ein Getterbauteil (28), das ein Gas absorbiert, das in dem ringförmigen Raum (21) vorhanden ist,
**dadurch gekennzeichnet, dass**
ein Wärmesammelrohr (2, 2a, 2b, 2c, 2d, 2e, 2f, 2g, 2h, 2i) an einer stromabwärtigen Seite des Wärmemediums eine größere Anzahl der Getterbauteile (28) hat als ein anderes Wärmesammelrohr (2, 2a, 2b, 2c, 2d, 2e, 2f, 2g, 2h, 2i) an einer stromaufwärtigen Seite des Wärmemediums.

2. Solarwärmekollektor (1, 10) nach Anspruch 1, **dadurch gekennzeichnet, dass** es eine Vielzahl von Aufnahmebauteilen (271, 273) aufweist, die die Getterbauteile (28) aufnehmen und halten.

## Revendications

1. Collecteur de chaleur solaire (1, 10) comprenant :
une pluralité de tubes collecteurs de chaleur (2, 2a, 2b, 2c, 2d, 2e, 2f, 2g, 2h, 2i) reliés en série, les tubes collecteurs de chaleur (2, 2a, 2b, 2c, 2d, 2e, 2f, 2g, 2h, 2i) incluant chacun :
un tube de circulation de milieu chauffant (20, 20a, 20b, 20c, 20d, 20e, 20f, 20g, 20h, 20i) à travers lequel un milieu chauffant circule ;
un tube en verre (22) qui couvre une surface périphérique extérieure du tube de circulation de milieu chauffant (20, 20a, 20b, 20c, 20d, 20e, 20f, 20g, 20h, 20i) et
forme un espace annulaire (21) entre le tube en verre (22) et le tube de circulation de milieu chauffant (20, 20a, 20b, 20c, 20d, 20e, 20f, 20g, 20h, 20i) ; et
un élément sorbeur (28) qui adsorbe un gaz qui existe à l'intérieur de l'espace annulaire (21), **caractérisé en ce qu'**un tube collecteur de chaleur (2, 2a, 2b, 2c, 2d, 2e, 2f, 2g, 2h, 2i) sur un côté en aval du milieu chauffant inclut un plus grand nombre des éléments sorbeurs (28) qu'un autre tube collecteur de chaleur (2, 2a, 2b, 2c, 2d, 2e, 2f, 2g, 2h, 2i) sur un côté en amont du milieu chauffant.

2. Collecteur de chaleur solaire (1, 10) selon la revendication 1, **caractérisé en ce qu'**il comprend une pluralité d'éléments de réception (271, 273) qui reçoivent et retiennent l'élément sorbeur (28).
